# EUROPEAN PATENT APPLICATION

(11) **EP 0 967 409 A1**
(43) Date of publication of application: **29.12.1999**
(21) Application number: 99401456.1
(22) Date of filing: 14.06.1999
(51) Int. Cl.: F16G 3/10

(54) **Belt connecting structure**

(30) Priority: 25.06.1998 JP 17915698; 25.06.1998 JP 17915798
(71) Applicant: Bridgestone Corporation, Tokyo (JP)
(72) Inventor: Imai, Atsushi, Yokohama-shi, Kanagawa-ken (JP); Inada, Takashi, Yokohama-shi, Kanagawa-ken (JP); Seki, Wataru, Ota-ku, Tokyo (JP)
(74) Representative: Rousset, Jean-Claude

(57) **Abstract**

A plurality of first steel cords (2) which have different length extend from the end of the first belt. A plurality of second steel cords (2') which have different length extend from the end of the second belt. The first steel cords (2) are closely opposite to the second steel cords (2'), rubber is inserted and vulcanized between the steel cords to connect the first and second steel cords (2,2'). The first steel cord (2) is overlapped with adjacent second steel cord (2') to increase strength and durability of the connecting portion of the belts.

## Description

### BACKGROUND OF THE INVENTION

The present invention relates to a connecting structure of belts such as conveyor belts in which a plurality of reinforcement cords such as steel cords are put to connect the belts.

In a conveyor belt used for a belt conveyor, a single or a plurality of flat belts are combined at each end and wound around a plurality of rollers in a frame.

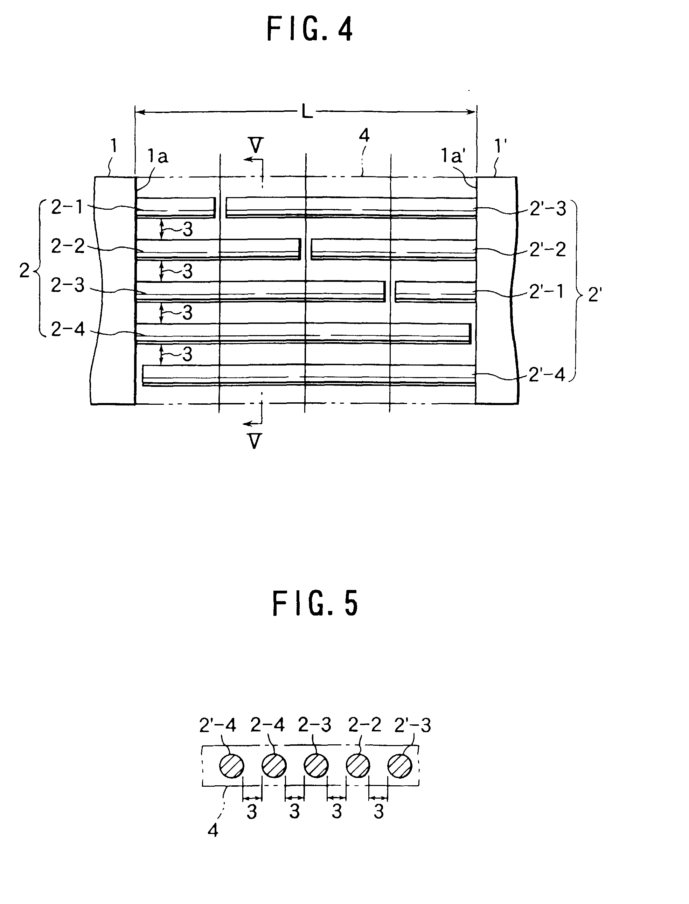

In Figs. 4 and 5, such a belt connecting structure is shown, in which a plurality of reinforcing steel cords which have different length extend from the ends 1a,1a' of opposing belts 1,1'. The numerals 2-1, 2'-1, 2-2, 2'-2, 2-3, 2'-3, 2-4 and 2'-4 are allotted to the steel cords in order of shortness. The numeral 2 is allotted to cover the four cords at the left side, while the numeral 2' is allotted to cover the four cords at the right side. Over a length "L" of a connecting portion or a splice, the single steel cords 2-4, 2-4' extend, and the connecting portion is divided into four sections. Other than the above steel cords, the steel cords at one side are opposite to the steel cords at the other side at boundaries of the sections at an equal distance 3, into which rubber 4 is inserted to bond the steel cords by additional vulcanization.

In such a belt connecting structure, the steel cords 2-1,2-2,2-3,2-4 which extend from the end 1a of a belt 1 are provided such that one cord is different from an adjacent cord in length by one section in order of shortness or length.

Strength and durability of the conveyor belt depend on the splice, and increase in strength and durability of the splice improve strength and durability of the whole belt.

To increase strength and durability of the connecting portion, length of the connecting portion is increased or the number of sections is increased. But it increases cost. Actually, combination thereof is employed to obtain desired strength and durability.

Conventionally, it was believed that the steel cords 2-1, 2-2, 2-3, 2-4 which extend from the end 1a of the belt 1 are arranged in order of shortness or length such that the cords differs in length by one section to obtain the highest connecting strength. However, the applicant found that it was wrong. It was found out that it was the most important to increase the sum of the lengths of overlapped portions between adjacent steel cords which extend from different belts.

### SUMMARY OF THE INVENTION

Therefore, it is an object of the present invention to provide a belt structure wherein strength and durability are increased without changes of the construction to attain lower cost.

### BRIEF DESCRIPTION OF THE DRAWINGS

The features and advantages of the present invention will become more apparent from the following description with respect to embodiments as shown in the drawings wherein:
Fig. 1 is a plan view of one embodiment of the present invention;
Fig. 2 is a sectional view taken along the line II-II in Fig. 1;
Fig. 3 is a schematic view of all combinations of a connecting portion of belts having steel cords of different lengths;
Fig. 4 is a plan view of a connecting portion of conventional belts; and
Fig. 5 is a sectional view taken along the line V-V in Fig. 4.

### DETAILED DESCRIPTION OF PREFERRED EMBODIMENTS

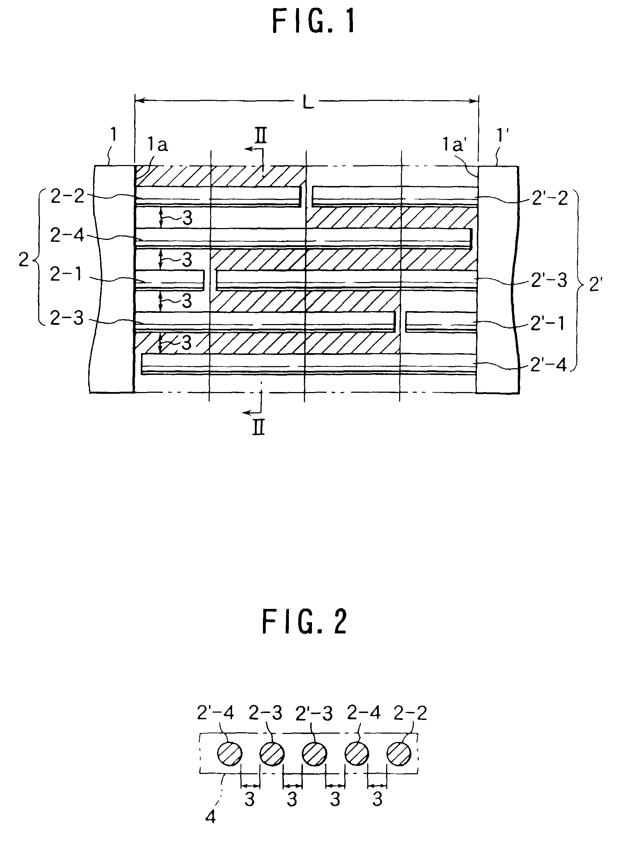

One embodiment of the present invention is shown in Figs. 1 and 2. The same numerals are allotted to elements similar to those in Figs. 4 and 5.

In the embodiment, a plurality of reinforcement steel cords 2-1, 2'-1, 2-2, 2'-2, 2-3, 2'-3, 2-4, 2'-4 which are allotted in order of shortness extend from the ends 1a,1a' of opposing belts 1,1'. The numerals 2 and 2' are further allotted to cover the steel cords at each side respectively. The longest steel cords 2-4,2-4' are solely provided, and the other steel cords are opposed at boundaries of a plurality of sections to which a whole length "L" of a connecting portion between the ends 1a,1a' is equally divided. The steel cords are arranged in parallel at an equal distance 3 side by side. Rubber 4 is inserted in the distances 3, thereby bonding the cords by additional vulcanization.

The arrangement as shown in Fig. 1 relates to one unit, which is continuously arranged vertically to make a wide belt.

The above structure is similar to that in Fig. 4. In the steel cords 2-1, 2'-1, 2-2, 2'-2, 2-3, 2'-3, 2-4, 2'-4 which extend from the ends 1a,1a' of the belts 1,1', adjacent cords are different in length by more than one section, so that the total Σ Δ L of difference Δ L in length of adjacent steel cords is the largest in combinations of the number and length of the steel cords 2-1, 2'-1, 2-2, 2'-2, 2-3, 2'-3, 2-4, 2'-4 which extend from the ends 1a,1a' of the belts 1,1'.

The steel cords 2 which extend from the left end 1a of the belt 1 are arranged in order of 2-2,2-4,2-1,2-3 vertically, and the steel cords 2' which extend from the right end 1a' of the belt 1' are arranged in order of 2'-3,2'-1,2'-4,2'-2, whereby the total Σ Δ L of difference Δ L in length of adjacent steel cords is the largest.

By the combination, the sum Σ DL of the length DL of overlapped portion of adjacent steel cords becomes the largest number such as 12, thereby increasing strength and durability of the connecting portion of the belts.

The highest oblique line portion in Fig. 1 illustrates an overlapped portion of the highest steel cord 2-2 with a steel cord above it. By inclusion of this oblique line portion, Σ DL for one unit can be caliculated. The total number of blocks of the steel cords divided by sections is twenty which four sections multiplied by five steel cords is.

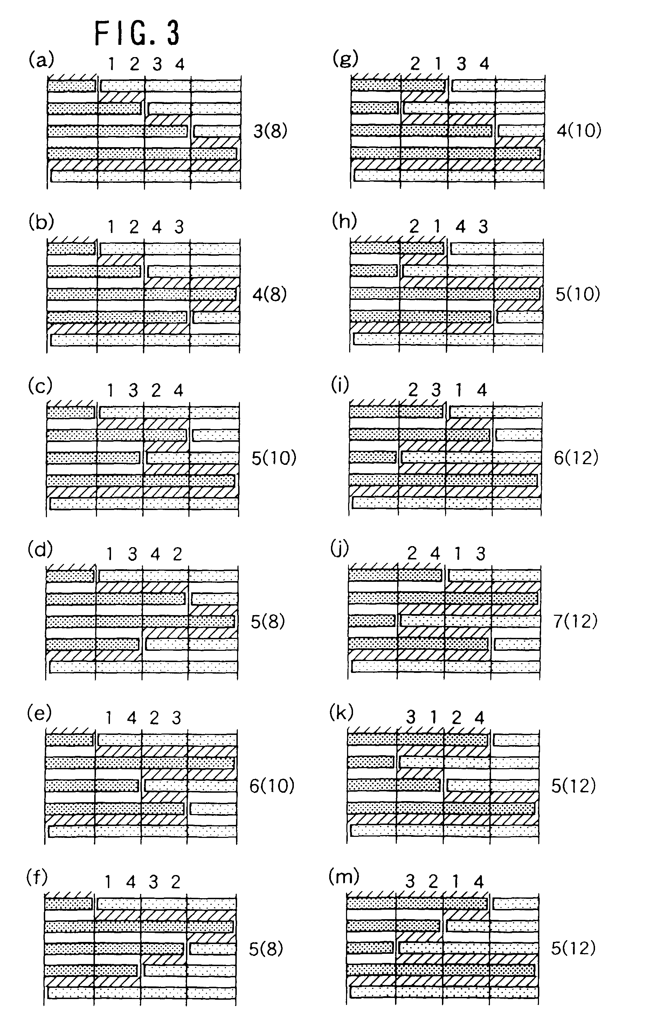

Fig. 3 illustrates all combinations of four sections having the same section length, comprising four steel cords 2 a unit which extends from the end 1a of the left belt 1.

Numerals at the upper parts such as 1234 in (a) of Fig. 3 mean lengths of four steel cords which extend from the end of the left belts; a numeral in the right parts such as 3 in (a) of Fig. 3 means the sum of differences in lengths of adjacent steel cords which extend from the end 1a of the belts 1; and a numeral in brackets such as (8) in (a) of Fig. 3 means the sum Σ DL of lengths DL of overlapped sections of adjacent opposite steel cords as shown by oblique lines in Fig. 3. Fig. 1 is the same as (j) of Fig. 3.

In Fig. 3, (a) is corresponding to a conventional combination as shown in Fig. 4.

In (b) to (m) in Fig. 3, at least one pair of adjacent steel cords are different in length by at least two sections in the steel cords which extend from the ends of left steel cords. Thus, the combinations (b) to (m) are larger in Σ Δ L and Σ DL than the conventional combination (a), i.e. Σ Δ L>3 and Σ DL>8, thereby increasing strength and durability of connecting portion of belts compared with a conventional combination.

In (b), (d) and (f) of Fig. 3, Σ DL of 8 is equal to that in the known combination (a). In (a), the longest steel cords which extend from the ends of left and right steel cords are adjacent to each other, thereby increasing strength thereof locally and decreasing strength of the other portions which cause cracking, but in (b), (c) and (f) of Fig. 3, the longest cords which extend from the ends of right and left belts are remote from each other, thereby dispersing high strength portions to provide uniform strength and to avoid possibility of cracking.

With respect to the combinations (a) to (m) as shown in Fig. 3, the maximum shear stress τₘₐₓ is determined under the same conditions. The combinations (a),(b),(d),(f) of Σ DL=8 is larger in τₘₐₓ than the combinations of (c),(e),(g),(h) of Σ DL=10 and (l),(j),(k),(m) of Σ DL=12. Especially, τₘₐₓ of the combination (j) which is the same as Fig. 1 is relatively smaller.

In all of the combinations (a) to (m), the number of blocks is 20 which four sections multiplied by five steel cords is, similar to that in Fig. 1. Therefore, by the combinations of more than 10 of Σ DL which means more than 50% of the total blocks, τₘₐₓ can be relatively lower, thereby improving strength and durability of the connecting portion of the belts.

In (j) of Fig. 3, Σ Δ L and Σ DL become the maximum such as 7 and 12, thereby increasing strength and durability of the connecting portion at maximum. Practically, it is sufficient to provide Σ Δ L>5.

In the foregoing embodiments, the number of the sections is 4, but 3 or more than 4 may be used in the present invention.

When the numbers of sections and steel cords which extend from one end of a belt are both three or are determined as N=3, there are three combinations of [123], [132] and [213], in which Σ DL are 6, 6 and 8 respectively. The combination [213] of Σ DL=8 is preferable.

When the numbers of sections and steel cords which extend from one end of a belt are both five or are determined as N=5, the number of combinations is sixty, and the number of blocks is N(N + 1)=30. The total number Σ DL of the blocks is 10 to 18, and it is preferable to determine combinations of 15 or more which is more than 50% of 30 which is the total number of blocks.

The foregoing merely relate to embodiments of the invention. Various changes and modifications may be made by person skilled in the art without departing from the scope of claims wherein:

## Claims

1. A belt connecting structure for connecting a first belt to a second belt,
a plurality of first steel cords which extend from an end of the first belt and have different lengths;
a plurality of second steel cords which extend from an end of the second belt and have different lengths, said plurality of first steel cords being closely opposite to said plurality of second steel cords at boundaries of a plurality of sections to which the connecting portion is assumptively divided at equal length, rubber being inserted between said steel cords and vulcanized to connect the first and second belts, one of the first steel cords being different in length from adjacent first steel cord, by at least two of the sections.

2. A belt connecting structure as defined in claim 1 wherein all of the first steel cords are different in length from adjacent first steel cords by at least two of the sections.

3. A belt connecting structure for connecting a first belt to a second belt,
a plurality of first steel cords which extend from an end of the first belt and have different lengths;
a plurality of second steel cords which extend from an end of the second belt and have different lengths, said plurality of first steel cords being closely opposite to said plurality of second steel cords at boundaries of a plurality of sections to which the connecting portion is assumptively divided at equal length, rubber being inserted between said steel cords and vulcanized to connect the first and second belts, if the connecting portion has a plurality of blocks which the number of the first steel cords and one multiplied by the number of the sections is, the sum Σ DL of the length DL of the anti-load blocks which the first steel cords are overlapped on adjacent second steel cord is over 50% of all the blocks.

4. A belt connecting structure as defined in claim 3 wherein the numbers of the sections and of the steel cords which extend from the first belt are both 4, the number of the blocks being 20, the number of the anti-load blocks being over 10.
